# EUROPÄISCHE PATENTSCHRIFT

(11) **EP 0 694 132 B1**
(45) Veröffentlichungstag und Bekanntmachung des Hinweises auf die Patenterteilung: **05.03.1997**
(21) Anmeldenummer: 94911834.3
(22) Anmeldetag: 07.04.1994
(51) Int. Cl.: F16D 63/00, B60T 13/74

(54) **RADBREMSE FÜR FAHRZEUGE, INSBESONDERE FÜR KRAFTFAHRZEUGE**
WHEEL BRAKE FOR VEHICLES, ESPECIALLY MOTOR VEHICLES
FREIN SUR ROUES POUR VEHICULES, NOTAMMENT POUR AUTOMOBILES

(30) Priorität: 16.04.1993 DE 4312524
(43) Veröffentlichungstag der Anmeldung: 31.01.1996
(73) Patentinhaber: ROBERT BOSCH GMBH, 70442 Stuttgart (DE)
(72) Erfinder: KELLER, Frieder, D-75015 Bretten (DE); HOLL, Eberhard, D-71701 Schwieberdingen (DE)
(86) Internationale Anmeldenummer: DE9400387
(87) Internationale Veröffentlichungsnummer: WO9424453

(56) Entgegenhaltungen:
- EP-A- 0 246 770
- EP-A- 0 325 031
- EP-A- 0 372 219
- US-A- 4 809 824

## Beschreibung

### Stand der Technik

Die Erfindung geht aus von einer Radbremse für Fahrzeuge nach der Gattung des Hauptanspruchs.

Aus US-A-4 809 824 ist schon eine solche Radbremse bekannt, bei welcher der Schraubspindeltrieb eine mit einer Mutter zusammenwirkende Spindel aufweist. Auf der drehbar in einem Kolben einer Zuspanneinrichtung aufgenommenen Mutter ist gleichachsig ein relativ zu dieser drehbares Zahnrad eines ersten Getriebezuges eines Rädergetriebes gelagert. Ein zweiter Getriebezug ist mit der Spindel verbunden und durch eine elektromagnetisch schaltbare Kupplung mit einem elektrischen Antriebsmotor verbindbar. Der erste Getriebezug hat ein geringfügig größeres Übersetzungsverhältnis als der zweite Getriebezug. Beide Getriebezüge sind im gleichen Drehsinn antreibbar.

Zum Zuspannen der Radbremse wird der Elektromotor eingeschaltet und die elektromagnetische Kupplung geschlossen. Die angetriebene Spindel bewegt den an einem Bremsbelag angreifenden Kolben der Zuspanneinrichtung mit relativ schnellem Vorschub gegen eine Bremsscheibe der Radbremse, während das auf der Mutter gelagerte Zahnrad des ersten Getriebezuges frei dreht. Nach Überwinden des Lüftspiels ruft die auf den Kolben wirkende Reaktionskraft einen Reibschluß zwischen diesem Zahnrad und der Mutter hervor, so daß auch diese im Drehsinn der Spindel angetrieben wird. Dabei bewirkt die Differenz der Drehgeschwindigkeiten von Mutter und Spindel eine stark verringerte Vorschubgeschwindigkeit des Kolbens.

Zum Halten der Zuspannkraft wird der Elektromotor abgeschaltet, während die elektromagnetische Kupplung geschlossen bleibt. Da das Zahnrad auf der Mutter mit dieser reibschlüssig gekuppelt ist, tritt eine Selbsthemmung durch Verspannen des Rädergetriebes auf.

Das Lösen der Radbremse erfolgt durch Trennen der elektromagnetischen Kupplung. Dadurch wird die Selbsthemmung des Rädergetriebes aufgehoben und der Kolben durch Antrieb der Mutter zurückgezogen. Solange der Reibschluß zwischen dieser und dem auf ihr gelagerten Zahnrad besteht, kann das Rückstellen des Kolbens vom im gleichen Drehsinn wie beim Zuspannen der Bremse drehenden Elektromotor unterstützt werden.

Diese bekannte Radbremse weist zwar ein Rädergetriebe sowie eine Zuspanneinrichtung in sehr kompakter Bauform auf, jedoch ist der Wirkungsgrad des Rädergetriebes und des Schraubspindeltriebs beim Zuspannen der Radbremse sehr ungünstig.

### Vorteile der Erfindung

Die erfindungsgemäße Radbremse mit den kennzeichnenden Merkmalen des Hauptanspruchs hat demgegenüber folgende Vorteile:

Die zweite Kupplung ist beim Zuspannen der Bremse in beliebiger axialer Stellung der Spindel durch Trennen der ersten Kupplung einschaltbar. Hierdurch kann auf einfache Weise das Übersetzungsverhältnis gewechselt und eine veränderte Charakteristik der Bremsbetätigung erzielt werden. Auch beim Lösen der Bremse ist es durch Steuern des von der elektromagnetisch schaltbaren, ersten Kupplung übertragbaren Momentes möglich, den Verlauf der Spannkraft zu beeinflussen. Zusätzlich kann durch Antrieb des Motors in gegenüber dem Zuspannen entgegengesetzter Drehrichtung und Rutschen der ersten Kupplung das Lüftspiel der Bremsbeläge eingestellt werden.

Insgesamt zeichnet sich die erfindungsgemäße Lösung durch einen günstigen Wirkungsgrad des Rädergetriebes mit Schraubspindeltrieb sowie durch verbesserte Steuerbarkeit durch entsprechende Betriebsweise von Elektromotor und elektromagnetisch schaltbarer, erster Kupplung aus.

### Zeichnung

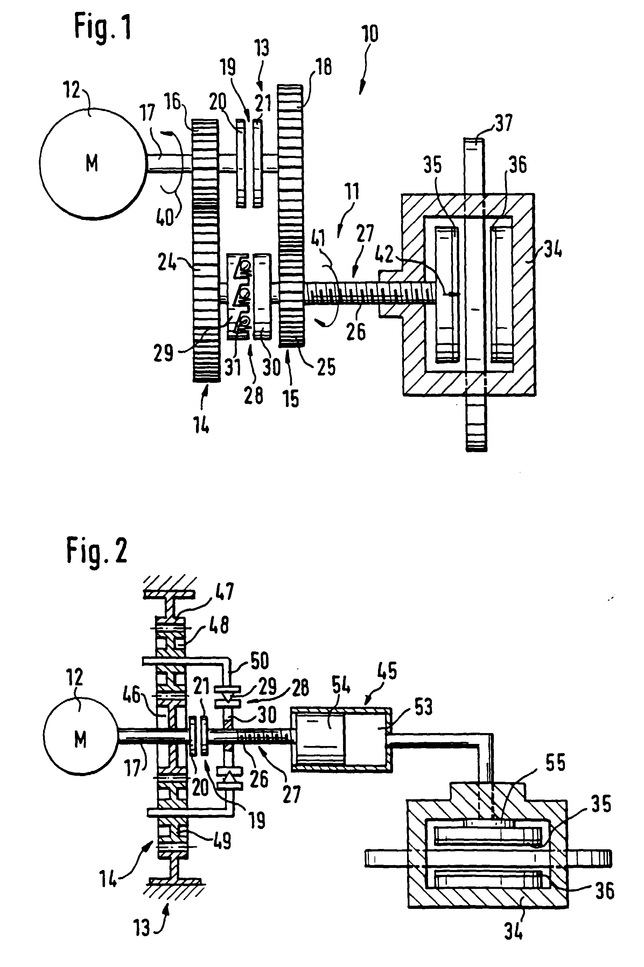

Zwei Ausführungsbeispiele der Erfindung sind in der Zeichnung vereinfacht dargestellt und in der nachfolgenden Beschreibung näher erläutert. Es zeigen Figur 1 schematisch eine Radbremse mit einem aus Stirnzahnrädern gebildeten Rädergetriebe zwischen einem Elektromotor und einer Spanneinrichtung als erstes Ausführungsbeispiel und Figur 2 schematisch eine Radbremse mit einem Planetengetriebe zwischen einem Elektromotor und einer Spanneinrichtung als zweites Ausführungsbeispiel.

### Beschreibung der Ausführungsbeispiele

Das in Figur 1 dargestellte erste Ausführungsbeispiel einer Radbremse 10 für Fahrzeuge, insbesondere für Kraftfahrzeuge, weist eine Spanneinrichtung 11 auf, welche von einem Elektromotor 12 mittels eines aus Stirnzahnrädern gebildeten Rädergetriebes 13 antreibbar ist. Das Rädergetriebe 13 hat zwei jeweils von einem Zahnradpaar gebildete Getriebezüge 14 und 15. Beide Getriebezüge 14 und 15 weisen ein unterschiedliches Übersetzungsverhältnis auf, wobei das Übersetzungsverhältnis des ersten Getriebezuges 14 größer ist als das des zweiten Getriebezuges 15. Das antriebsseitige Rad 16 des ersten Getriebezuges 14 ist auf der Motorwelle 17 des Elektromotors 12 befestigt. Der erste Getriebezug 14 ist somit unmittelbar vom Elektromotor 12 antreibbar. Dieser ist in zwei Drehrichtungen schaltbar. Das antriebsseitige Rad 18 des zweiten Getriebezuges 15 verläuft gleichachsig zum Rad 16 des ersten Getriebezuges 14. Das Rad 18 des zweiten Getriebezuges 15 ist gleichfalls vom Elektromotor 12 antreibbar, und zwar mittels einer zwischen den beiden Rädern 16 und 18 angeordneten ersten Kupplung 19. Die Kupplung 19 ist elektromagnetisch schaltbar und kann durch entsprechende Stromsteuerung sowohl schlupffrei als auch mit Schlupf betrieben werden. Ihre eine Hälfte 20 ist mit dem Rad 16 des ersten Getriebezuges 14, ihre andere Hälfte 21 mit dem Rad 18 des zweiten Getriebezuges 15 verbunden.

Das Rad 16 kämmt mit einem abtriebsseitigen Rad 24 des ersten Getriebezuges 14, das Rad 18 mit einem abtriebsseitigen Rad 25 des zweiten Getriebezuges 15. Die beiden parallelen Getriebezüge 14 und 15 weisen die gleiche Räderzahl auf. Bei geschlossener erster Kupplung 19 drehen daher die abtriebsseitigen Räder 24 und 25 im gleichen Drehsinn. Das abtriebsseitige Rad 25 des zweiten Getriebezuges 15 ist drehfest mit einer Spindel 26 eines Schraubspindeltriebs 27 für die Betätigung der Spanneinrichtung 11 verbunden. Zwischen den beiden gleichachsig gelagerten abtriebsseitigen Rädern 24 und 25 der beiden Getriebezüge 14 und 15 ist eine zweite Kupplung 28 angeordnet. Ihre eine Hälfte 29 steht mit dem Rad 24 des ersten Getriebezuges 14, ihre andere Kupplungshälfte 30 mit dem Rad 25 des zweiten Getriebezuges 15 in Verbindung. Beide Kupplungshälften 29 und 30 sind durch Klemmkörper 31 drehrichtungsabhängig kuppelbar. Die zweite Kupplung 28 vermag Drehmomente vom ersten Getriebezug 14 zum zweiten Getriebezug 15 zu übertragen, wenn die Drehzahl des Rades 24 größer oder gleich der Drehzahl des Rades 25 ist. (Die Drehzahl wird in Richtung des Pfeiles 41 positiv gezählt.) In Drehrichtung entgegen dem Pfeil 41 sind Drehmomente übertragbar, wenn die Drehzahl des Rades 25 größer oder gleich der Drehzahl des Rades 24 ist.

Die Spindel 26 des Schraubspindeltriebes 27 durchgreift ein nicht dargestelltes Muttergewinde in einem schwimmend gelagerten Bremssattel 34 der Radbremse 10. Im Bremssattel 34 ist auf der Spindel 26 ein Bremsbelag 35 abgestützt. Ein zweiter Bremsbelag 36 ist im Bremssattel 34 angeordnet. Zwischen den beiden Bremsbelägen 35 und 36 ist eine Bremsscheibe 37 einer Scheibenbremse hindurchgeführt. In der gezeichneten Ausgangsstellung der Radbremse 10 nehmen die Bremsbeläge 35 und 36 ein übertrieben groß wiedergegebenes Lüftspiel gegenüber der Bremsscheibe 37 ein.

### Wirkungsweise

Zum Zuspannen der Radbremse 10 wird der Elektromotor 12 eingeschaltet, so daß er in Richtung des Pfeiles 40 dreht, und die erste Kupplung 19 wird geschlossen. Die abtriebsseitigen Räder 24 und 25 der beiden Getriebezüge 14 und 15 drehen in Richtung des Pfeils 41. Aufgrund des Rechtsgewindes der Spindel 26 führt der Bremsbelag 35 eine Zustellbewegung auf die Bremsscheibe 37 in Richtung des Pfeiles 42 aus. Der zweite Getriebezug 15 überträgt das vom Elektromotor 12 aufgebrachte Antriebsmoment auf die Spindel 26, weil aufgrund der eingangs angegebenen Übersetzungsverhältnisse das abtriebsseitige Rad 25 des zweiten Getriebezuges 15 schneller dreht als das abtriebsseitige Rad 24 des ersten Getriebezuges 14, so daß die zweite Kupplung 28 keinen Kraftschluß besitzt. Aufgrund des Übersetzungsverhältnisses des zweiten Getriebezuges 15 erfolgt die Überwindung des Lüftspiels mit hoher Zustellgeschwindigkeit. Dabei sind nur sehr geringe Spannkräfte zu überwinden. Nach Angriff der Bremsbeläge 35 und 36 an der Bremsscheibe 37 steigen die Spannkräfte steil an. Die Antriebsleistung des Elektromotors 12 und das von der ersten Kupplung 19 übertragbare Drehmoment sind so gewählt, daß die Spannkraft bis zur Blockiergrenze des auf griffiger Fahrbahn laufenden Fahrzeugrades gesteigert werden kann. Für weitere Spannkrafterhöhungen, z.B. bei temperaturbedingtem Nachlassen des Bremsbelagreibwertes oder bei Funktionen einer Antriebsschlupf- und Fahrdynamikregelung, wird die erste Kupplung 19 geöffnet und das Motormoment über den ersten Getriebezug 14 und die sich schließende zweite Kupplung 28 auf die Spanneinrichtung 11 übertragen. Abweichend hiervon kann die Umschaltung auch bereits bei niedrigen Spannkräften erfolgen, um bei verringerter Zustellgeschwindigkeit die Belastung des Elektromotors 12 zu mindern.

Zum Halten der Spannkraft wird die erste Kupplung 19 geschlossen. Aufgrund der unterschiedlichen Übersetzungsverhältnisse der beiden Getriebezüge 14 und 15 bleibt der Kraftschluß der zweiten Kupplung 28 erhalten, so daß durch Verspannen des Rädergetriebes 13 eine Selbsthemmung auftritt. Der Elektromotor 12 muß daher kein Drehmoment aufbringen und kann abgeschaltet werden.

Zum Lösen der Radbremse 10 wird die erste Kupplung 19 geöffnet. Die durch die Elastizität des Bremssattels 34 erzeugten Rückstellkräfte bewirken eine Drehbewegung der Spindel 26 entgegen der Richtung des Pfeiles 41, was die Aufrechterhaltung des Kraftschlusses in der zweiten Kupplung 28 zur Folge hat. Unter der Voraussetzung, daß der Schraubspindeltrieb 27 und das Rädergetriebe 13 nicht selbsthemmend sind, wird bei der Rückstellung der Spindel 26 der Elektromotor 12 mittels des ersten Getriebezuges 14 entgegen der Richtung des Pfeiles 40 angetrieben. Für das völlige Lösen der Bremse sowie das Einstellen des Lüftspiels wird die erste Kupplung 19 mit verringertem Kupplungsstrom angesteuert. Außerdem wird der Elektromotor 12 entgegen der Richtung des Pfeiles 40 angetrieben. Durch den gezielt eingestellten Schlupf der ersten Kupplung 19 wird einerseits eine Drehmomentübertragung vom Elektromotor 12 auf die Spindel 26 erzielt, andererseits eine Selbsthemmung des Rädergetriebes 13 verhindert.

Das in Figur 2 dargestellte zweite Ausführungsbeispiel unterscheidet sich vom ersten im wesentlichen dadurch, daß das Rädergetriebe 13 als Planetengetriebe ausgebildet ist und der Schraubspindeltrieb 27 auf eine hydraulische Betätigungseinrichtung 45 zum Übertragen der Spannkräfte einwirkt. Dabei besteht der erste Getriebezug 14 des Rädergetriebes 13 aus einem auf der Motorwelle 17 des Elektromotors 12 befestigen Sonnenrad 46, mit diesem kämmenden und auf einem feststehenden Hohlrad 47 sich abwälzenden Planetenrädern 48, 49, deren Steg 50 mit der Kupplungshälfte 29 der zweiten, als Freilauf ausgebildeten Kupplung 28 verbunden ist. Die andere Hälfte 30 der zweiten Kuppplung 28 ist auf der Spindel 26 des Schraubspindeltriebes 27 befestigt. Von der gleichfalls vorhandenen ersten Kupplung 19 ist die eine Hälfte 20 mit der Motorwelle 17 und die andere Hälfte 21 mit der Spindel 26 verbunden. Bei dieser Ausführungsform ist also der zweite Getriebezug 15 auf die Hälfte 21 der ersten Kupplung 19 und die Spindel 26 des Schraubspindeltriebes 27 reduziert.

Die Spindel 26 greift an einem axial in einem Zylinder 53 bewegbaren Kolben 54 der hydraulischen Betätigungseinrichtung 45 an. Die Betätigungseinrichtung 45 steht mit einer im einzelnen nicht dargestellten Kolben-Zylinderanordnung 55 zum Zuspannen und Lösen der Bremsbeläge 35 und 36 im Bremssattel 34 in Verbindung.

Bei dieser Ausführungsform wird bei geschlossener erster Kupplung 19 die Drehzahl des Elektromotors 12 auf die Spindel 26 des Schraubspindeltriebs 27 übertragen. Das Lüftspiel der Bremsbeläge 35 und 36 kann somit sehr schnell überwunden werden. Zweckmäßig wird die weitere Steigerung der Spannkräfte nach Trennen der ersten Kupplung 19 mittels des eine große Übersetzung ins Langsame aufweisenden ersten Getriebezuges 14 vorgenommen. Im übrigen ist eine Betriebsweise analog dem ersten Ausführungsbeispiel gegeben.

## Patentansprüche

1. Radbremse (10) für Fahrzeuge, insbesondere für Kraftfahrzeuge,
- mit einer Spanneinrichtung (11) zum Anlegen von Bremsbelägen (35, 36) an eine Bremstrommel oder eine Bremsscheibe (37) mittels der Spindel (26) eines Schraubspindeltriebs (27),
- mit einem Elektromotor (12) zum Betätigen der Spanneinrichtung (11),
- mit einem zwischen dem Elektromotor (12) und der Spanneinrichtung (11) angeordneten Rädergetriebe (13) mit zwei parallelen Getriebezügen (14, 15), von denen ein erster Getriebezug (14) unmittelbar vom Elektromotor (12) antreibbar ist und ein größeres Übersetzungsverhältnis als der zweite Getriebezug (15) hat, der abtriebsseitig mit der Spindel (26) verbunden ist,
- mit einer elektromagnetisch schaltbaren, ersten Kupplung (19) zwischen der dem Elektromotor (12) zugeordneten Antriebsseite beider Getriebezüge (14, 15) sowie
- mit einer schaltbaren, zweiten Kupplung (28) zwischen der der Spanneinrichtung (11) zugeordneten Abtriebsseite beider Getriebezüge (14, 15),
gekennzeichnet durch die Merkmale:
- der Elektromotor (12) ist in beiden Drehrichtungen antreibbar,
- die zweite Kuppplung (28) ist drehrichtungsabhängig schaltbar und vermag Drehmomente beim Zuspannen der Radbremse (10) vom ersten Getriebezug (14) zum zweiten Getriebezug (15) und beim Lösen der Radbremse (10) vom zweiten Getriebezug (15) zum ersten Getriebezug (14) zu übertragen.

2. Radbremse nach Anspruch 1, dadurch gekennzeichnet, daß die Spindel (26) des Schraubspindeltriebs (27) in Eingriff mit einem Kolben (54) einer hydraulischen Betätigungseinrichtung (45) der Spanneinrichtung (11) steht.

3. Radbremse nach Anspruch 1, dadurch gekennzeichnet, daß bei in Zuspanndrehrichtung antreibendem Elektromotor (12) und geschlossener Kupplung (19) die Bremskraft bis zur Blockierbremsung auf griffiger Fahrbahn steigerbar ist.

4. Radbremse nach Anspruch 1, dadurch gekennzeichnet, daß bei abgeschaltetem Elektromotor (12) und geschlossener Kupplung (19) eine Bremskraft beliebiger Größe aufrechterhaltbar ist.

5. Radbremse nach Anspruch 1, dadurch gekennzeichnet, daß bei in Lösedrehrichtung antreibendem Elektromotor (12) die Kupplung (19) für die Einstellung des Lüftspiels im Schlupfzustand betreibbar ist.

## Claims

1. Wheel brake (10) for vehicles, particularly for motor vehicles,
- with an application device (11) for applying brake linings (35, 36) to a brake drum or a brake disc (37) by means of the screw (26) of a screw drive (27),
- with an electric motor (12) for actuating the application device (11),
- with a wheel gear (13) arranged between the electric motor (12) and the application device (11) and having two parallel gear trains (14, 15), of which a first gear train (14) can be driven directly by the electric motor (12) and has a larger transmission ratio than the second gear train (15), which is connected on the output side to the screw (26),
- with an electromagnetically operable first clutch (19) between the input side of both gear trains (14,15), the side associated with the electric motor (12), and
- with an operable second clutch (28) between the output side of both gear trains (14, 15), the side associated with the application device (11),
characterized by the following features:
- the electric motor (12) can be driven in both directions of rotation,
- the second clutch (28) is operable as a function of the direction of rotation and is capable of transmitting torques from the first gear train (14) to the second gear train (15) during the application of the wheel brake (10) and of transmitting torques from the second gear train (15) to the first gear train (14) during the release of the wheel brake (10).

2. Wheel brake according to Claim 1, characterized in that the screw (26) of the screw drive (27) is in engagement with a piston (54) of a hydraulic actuating device (45) of the application device (11).

3. Wheel brake according to Claim 1, characterized in that, with the electric motor (12) driving in the direction of rotation corresponding to application and with the clutch (19) closed, the braking force can be increased up to lock-up braking on a roadway with good grip.

4. Wheel brake according to Claim 1, characterized in that, with the electric motor (12) switched off and the clutch (19) closed, a braking force of any desired magnitude can be maintained.

5. Wheel brake according to Claim 1, characterized in that, with the electric motor (12) driving in the direction of rotation corresponding to release, the clutch (19) can be operated in the slipping state to adjust the release clearance.

## Revendications

1. Frein de roue (10), en particulier pour véhicules automobiles,
- avec un dispositif de serrage (11) servant à appliquer des garnitures de frein (35, 36) sur un tambour de frein ou sur un disque de frein (37) au moyen de la broche (26) d'un mécanisme d'entraînement à broche filetée (27),
- avec un moteur électrique (12) servant à actionner le dispositif de serrage (11),
- avec une transmission (13) disposée entre le moteur électrique (12) et le dispositif de serrage (11), avec deux engrenages parallèles (14, 15), dont un premier engrenage (14) peut être entraîné directement par le moteur électrique (12) et a un rapport de démultiplication plus grand que le second engrenage (15), qui est relié du côté mené à la broche (26),
- avec un premier embrayage (19) que l'on peut actionner de façon électromagnétique, entre le côté mené, associé au moteur électrique (12), des deux engrenages (14, 15) et
- avec un second embrayage (28) actionnable, entre le côté mené, associé au dispositif de serrage (11) des deux engrenages (14, 15),
caractérisé par les particularités suivantes :
- le moteur électrique (12) peut être entraîné dans les deux sens,
- le deuxième embrayage (28) peut être actionné en fonction du sens de rotation et permet la transmission de couples de rotation, lors du serrage du frein de roue (10), du premier engrenage (14) au second engrenage (15) et lors du desserrage du frein de roue (10) du second embrayage (15) du premier engrenage (14).

2. Frein de roue selon la revendication 1,
caractérisé en ce que
la broche (26) du mécanisme d'entraînement à broche filetée (27) vient en prise avec un piston (54) d'un dispositif hydraulique d'actionnement (45) du dispositif de serrage (11).

3. Frein de roue selon la revendication 1,
caractérisé en ce que
quand le moteur électrique (12) entraîne dans le sens de rotation du serrage et quand l'embrayage (19) est fermé, on peut augmenter la force de freinage jusqu'au freinage de blocage sur chaussée rugueuse.

4. Frein de roue selon la revendication 1,
caractérisé en ce que
quand le moteur électrique (12) est débranché et quand l'embrayage (19) est fermé, on peut conserver une force de freinage de n'importe quelle grandeur.

5. Frein de roue selon la revendication 1,
caractérisé en ce que
quand le moteur électrique entraîne dans le sens du desserrage, on peut actionner l'embrayage (19) pour régler l'intervalle d'air en position de patinage.
